# EUROPEAN PATENT APPLICATION

(11) **EP 4 848 024 A1**
(43) Date of publication of application: **02.12.2026**
(21) Application number: 25745521.2
(22) Date of filing: 19.03.2025
(51) Int. Cl.: G05D 1/243, A01B 69/00, G05D 1/43, G05D 1/246, G05D 1/617

(54) **TRAVELING ROBOT**

(30) Priority: 24.01.2024 JP 2024008839
(71) Applicant: Kisui Co., Ltd., Sendai-shi, Miyagi 980-0845 (JP)
(72) Inventor: BLUM Tamir, Sendai-shi, Miyagi 980-0845 (JP)
(74) Representative: Herrero & Asociados, S.L.
(86) International application number: PCT/JP2025/010876
(87) International publication number: WO 2025/159215

(57) **Abstract**

To improve the accuracy of autonomous route setting by a traveling robot.

A traveling means 103 travels to a destination location according to a set route. A determination means 106 determines the presence or absence of an obstacle on the route, a road surface condition of the route, and the presence or absence of a preset travel-prohibited zone on the route on the basis of an image acquired by a photographing means during traveling on the route. A route control means 107 determines the necessity of correction of the route on the basis of a result of the determination by the determination means.

## Description

### Technical Field

The present invention relates to control of a travel route of a robot.

### Background Art

There is a robot having a function of traveling in agricultural land to assist agricultural work. Such a traveling robot is required to travel while avoiding obstacles.

Therefore, Patent Literature 1 describes a route search device that detects an obstacle (rocks, trees, water, grasses, buildings, and the like) by a sensor such as a camera, predicts a temporal change of the detected obstacle, estimates a state of the obstacle at a date and time of traveling on a route, and performs a route search on the basis of whether the obstacle affects travel.

Patent Literature 2 describes a travel area determining device that extracts a geometric feature amount (irregularities, curvatures, dispersion values of irregularities, and the like in neighboring areas) from shape data measured by a sensor such as a laser range finder, determines a rut as a travelable area by applying machine learning to the extracted feature amount, and determines any other area as a non-travelable area due to an obstacle. In addition, Patent Literature 2 describes that grass growing at the center of a travel path is set as a "non-travelable area".

Patent Literature 3 discloses a travel assistance device that identifies an obstacle present in a blind spot, classifies the identified obstacle into a static obstacle or a dynamic obstacle depending on the presence or absence of a temporal change in the center position of the identified obstacle, and evaluates the degree of risk of collision with the dynamic obstacle.

Patent Literature 4 describes setting a high encounter probability of a route that had dynamic obstacle information in the past and selecting a route with the lowest encounter probability among routes. In addition, Patent Literature 4 describes that a map of a static obstacle and a map of an autonomous travel area excluding the static obstacle are prepared as maps, information of a dynamic obstacle is also acquired during traveling, and a route with the dynamic obstacle is avoided when the dynamic obstacle is detected.

### Citation List

### Patent Literature

Patent Literature 1: JP 2019-8431 A
Patent Literature 2: JP 2009-175932 A
Patent Literature 3: WO 2016/117060 A1
Patent Literature 4: JP 2014-209293 A

### Summary of Invention

### Technical Problem

In the conventional techniques described in Patent Literatures 1 to 4, it is not that an obstacle and a road surface condition are simultaneously determined when a robot travels. Therefore, for example, there has been a case where the robot travels on a route with no obstacle but having a poor road surface condition. As a result, there have been cases where the robot becomes unable to travel on the way, or a travel mechanism is damaged. In addition, for example, in a case where the robot travels in the agricultural land, even if there is no obstacle and a road surface condition is good, there is a possibility that an accident or the like occurs in which the robot enters a travel-prohibited zone outside a work area such as an adjacent site or goes out of the agricultural land and collides with an automobile or a person.

An object of the present invention is to improve the accuracy of autonomous route setting by a traveling robot.

### Solution to Problem

The present invention provides a traveling robot including: a traveling means that travels to a destination location according to a set route; a photographing means; a determination means that determines the presence or absence of an obstacle on the route, a road surface condition of the route, and the presence or absence of a preset travel-prohibited zone on the route on the basis of an image acquired by the photographing means during traveling on the route; and a route control means that determines the necessity of correction of the route on the basis of a result of the determination by the determination means.

### Advantageous Effects of Invention

The present invention improves the safety of traveling by the traveling robot.

### Brief Description of Drawings

Fig. 1 is a block diagram illustrating a configuration of a traveling robot according to an embodiment of the present invention.
Fig. 2 is a diagram schematically illustrating an example of map information according to the embodiment.
Fig. 3 is a flowchart illustrating the operation of the embodiment.
Fig. 4 is a diagram illustrating an operation example of the embodiment.
Fig. 5 is a diagram illustrating an example of the updated map information according to the embodiment.

### Description of Embodiments

Hereinafter, embodiments of the present invention will be described with reference to the drawings.

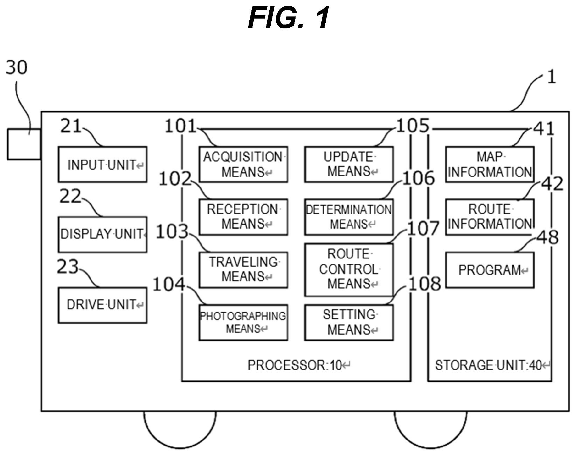

Fig. 1 is a block diagram illustrating a configuration of a traveling robot 1 according to an embodiment of the present invention. The traveling robot 1 is a robot that travels in agricultural land and performs agricultural work, for example, weeding work, transportation of harvested products, and the like. Note that it is sufficient if the agricultural land is any outdoor land used for cultivation of crops, grazing of livestock, and the like, and the type of crops to be cultivated, the degree and methods of management, and the like do not matter.

As illustrated in Fig. 1, the traveling robot 1 includes a processor 10 that controls the entirety, an input unit 21 for inputting various types of information, a display unit 22 such as a liquid crystal panel, a drive unit 23 that drives each unit such as a wheel of the traveling robot 1, a camera 30 that photographs the front of the traveling robot 1, and a storage unit 40. The storage unit 40 includes a volatile storage unit such as a RAM and a non-volatile storage unit such as a hard disk. The volatile storage unit is used as a work area by the processor 10. The non-volatile storage unit stores map information 41, route information 42, and a program 48. The map information 41 is information indicating a map of agricultural land where the traveling robot 1 performs work.

The map information 41 divides the agricultural land to be managed into a plurality of areas, and defines an object or a state located in the area, such as an obstacle, a road where traveling is possible, and a road surface condition (for example, puddles) of a bad road, for each area. The route information 42 is information indicating a travel route of the traveling robot 1 on the map indicated by the map information 41. The program 48 is a program for controlling the traveling robot 1 so that the traveling robot 1 performs a task related to agricultural work (such as transport of supplies and harvested materials, inspection of crops, livestock, and the like, spraying of agricultural chemicals).

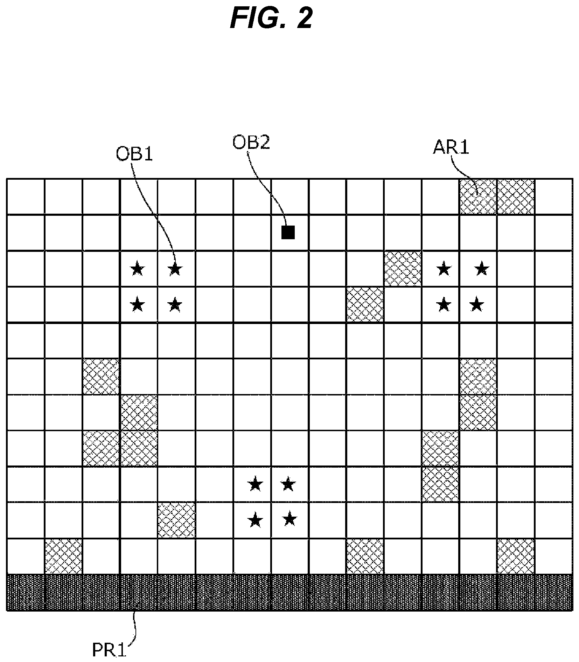

Fig. 2 is a schematic diagram of an example of the map information 41. The land to be managed is divided into two-dimensional areas, and objects indicating a state of each area are displayed in a superimposed manner. An object OB1 indicates an area in which crops are planted and which is specified as an area that the traveling robot should not enter, an object OB2 indicates an area in which an obstacle such as agricultural equipment exists, an object AR1 indicates an area having a certain level of the risk of traveling since the area has a higher altitude than the surroundings (the area is a hill), and any other object indicates an area in which there is no particular problem in traveling. Note that an object PR1 indicates land not to be managed.

In the present embodiment, the processor 10 executes the program 48, thereby functioning as an acquisition means 101, a reception means 102, a traveling means 103, a photographing means 104, an update means 105, a determination means 106, a route control means 107, and a setting means 108.

Here, the acquisition means 101 is a means that captures the map information 41 from the outside via the input unit 21 and stores the map information 41 in the storage unit 40. The acquisition means 101 may receive image data acquired by aerially photographing the agricultural land via the input unit 21, and generate the map information 41 on the basis of the received image data. The reception means 102 is a means that receives the settings of a departure location and a destination location of the traveling robot 1 on the map indicated by the map information 41.

The traveling means 103 is a means that performs control to cause the traveling robot 1 to travel along the route indicated by the route information 42. Here, the route information 42 may be set by a human, or may be searched by the processor 10 of the traveling robot 1. In other words, the traveling robot 1 may be of a semi-autonomous type in which a part (destination location, transit point, or the like) or all of the information of a route on which the traveling robot 1 should travel is provided, or may be of a fully autonomous type in which the traveling robot 1 determines a traveling plan necessary for performing a given task, including a destination location. Note that, even in a case where the route information is designated in advance (that is, before the start of traveling), as will be described later, there is a function of appropriately correcting the route on the basis of an image captured during traveling.

The photographing means 104 is a means that photographs an area in front of the traveling robot 1 by the camera 30. In the present embodiment, the camera 30 includes a stereo camera (two cameras) capable of measuring a depth. In the photographing means 104, the image is converted into a point group (pixel group). Each pixel has an object class and a distance. The generation of the pixel group is performed using a technique of AI semantic segmentation and object localization.

The update means 105 is a means that updates the map information 41 on the basis of an image acquired by the photographing means 104. More specifically, in a case where the image acquired by the photographing means 104 indicates that an obstacle has appeared in a certain area, information indicating the presence of the obstacle is mapped to the area of the map information 41. In addition, in a case where the image acquired by the photographing means 104 indicates that puddles have appeared in a certain area, information indicating a road surface condition with puddles is mapped to the area of the map information 41.

The determination means 106 is a means that determines the presence or absence of an obstacle on the route, the road surface condition of the route, and the presence or absence of a preset travel-prohibited zone on the route on the basis of the image acquired by the photographing means 104 while the traveling robot 1 is traveling on the route. The determination is made on the basis of the map information 41 and the route information 42. In other words, the determination means 106 determines, on the basis of the map information 41, whether there is an obstacle, an area with a poor road surface condition, or a preset travel-prohibited zone in the middle of the route indicated by the route information 42.

Here, the obstacle is a person, a ladder, an agricultural machine, a basket, a fence, a post, a rock, a fallen branch, or the like. The road surface condition is an element that affects the risk of traveling, such as unevenness, inclination, and the degree of mud. The travel-prohibited zone is an area where the traveling of the traveling robot is prohibited even if there is no obstacle on the route and the traveling robot can travel on the road surface, and is, for example, agricultural land, a public road, or the like managed by another person.

The route control means 107 is a means that determines the necessity of correction of the route on the basis of a result of the determination by the determination means 106.

A specific example of the determination on the necessity of correction of the route is as follows. In a case where the set route (route indicated by the route information 42) avoids a static obstacle, does not enter the prohibited area, and is traveling in the best road surface condition, it is determined that the correction is unnecessary, and otherwise, it is determined that the correction is necessary. In addition, in a case where an obstacle on the set route is a dynamic obstacle (farmer, another robot, or the like), it is determined that there is no need to change the route and waiting will be performed. In addition, the necessity of change of the route is determined depending on the nature of the dynamic obstacle and/or in consideration of the presence or absence of an alternative route and the risk (cost) of the alternative route. In a case where a person, another robot, or the like is moving quickly and randomly (that is, without predictability) on the route and there is a reasonable alternative route, it is determined that the route should be changed. This is because it is estimated that there is a high possibility that the traveling robot 1 interferes with a person or another robot in such a case.

Note that a machine learning method may be used when at least one of a determination of a road surface condition (whether the area is a paved road or an area maintained to some extent for passage, an unmaintained area such as lawn, an area in which crops are planted, or a muddy area, or the like), a determination of the presence or absence or the nature of an obstacle, and a determination of a travel-prohibited zone is performed on the basis of the image captured by the camera 30.

The route control means 107 has a function of searching for an alternative route in a case where it is determined that the route correction is necessary.

The setting means 108 is a means that searches, on the basis of the current map information 41, for an optimum route from the departure location to the destination location, the optimum route having been received by the reception means 102, and sets the optimum route as the route information 42. The route information 42 acquired by the route control means 107 may include a route with unnecessary detours, but with the setting means 108, the route information 42 that has no detours (and is efficient) from the departure location to the destination location is acquired.

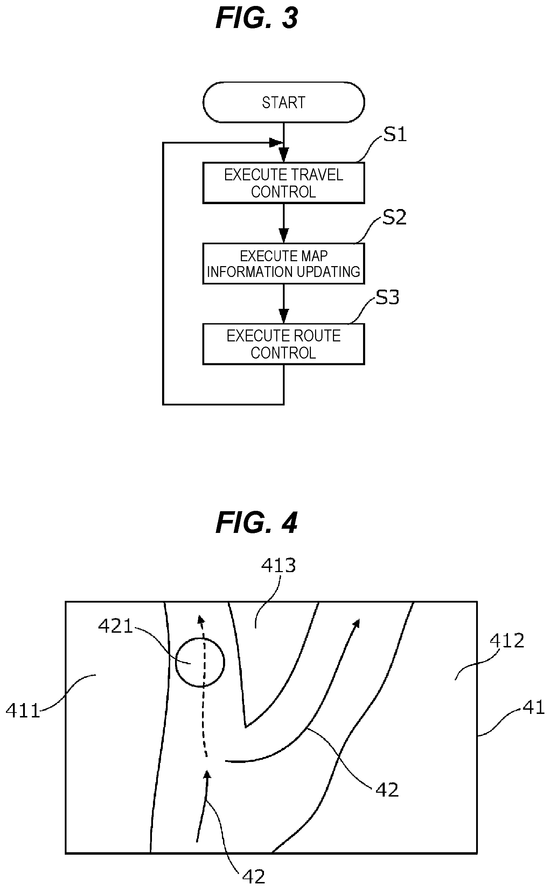

Next, the operation of the present embodiment will be described. Fig. 3 is a flowchart illustrating the operation of the processor 10. In the present embodiment, the processor 10 repeatedly executes travel control (step S1), map information updating (step S2), and route control (step S3) according to the program 48.

In the travel control (step S1), the processor 10 performs control to cause the traveling robot 1 to travel along the route indicated by the route information 42. More specifically. The processor 10 estimates the current position of the traveling robot 1 by comparing the image acquired by the photographing means 104 with the map indicated by the map information 41. Then, in a case where the current position has deviated from the route indicated by the route information 42, the processor 10 performs control to return the current position to the route.

Next, in the map information updating (step S2), the processor 10 detects a change in an object (for example, occurrence of a dynamic obstacle, a change in the road surface condition, and the like) on the map on the basis of the image acquired by the photographing means 104, and reflects the change in the map information 41.

Next, in the route control (step S3), the processor 10 determines the necessity of correction of the route on the basis of the map information 41 and the route information 42, and performs the correction of the route or the like in a case where the correction is necessary. The correction of the route is executed with the highest priority on a part to be corrected, which is close to the current position of the traveling robot 1. Then, when step S3 ends, the processing returns to step S1.

Fig. 4 is a diagram illustrating an operation example of the present embodiment.

Fig. 4 illustrates a part of the map information 41 and the route information 42 stored in the storage unit 40. In the operation example, the traveling robot 1 initially travels in an area sandwiched between travel-prohibited areas 411 and 412. However, the road branches into two in a travel-prohibited area 413. It is assumed that the route of the traveling robot 1 is initially scheduled to pass through an area between the travel-prohibited areas 411 and 413. However, according to the image acquired by the photographing means 104, there is an area 421 that is muddy due to rain in the area between the travel-prohibited areas 411 and 413. Therefore, the route control means 107 corrects the route of the traveling robot 1 so that the route of the traveling robot 1 becomes a route passing through an area sandwiched between the travel-prohibited areas 413 and 412.

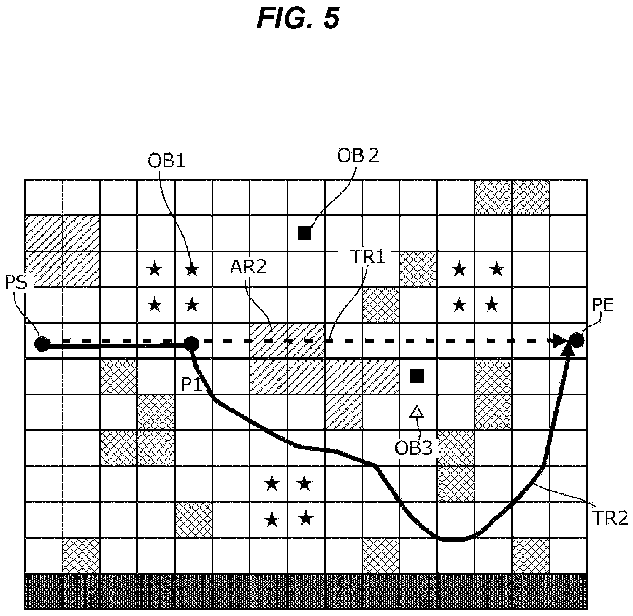

This will be described in more detail with reference to the example of Fig. 3. Fig. 5 illustrates the map information updated after the traveling of the traveling robot 1 in the map information of Fig. 3. In this example, traveling from an departure point PS to a target point PE is designated. On the basis of the latest map information before updating, the traveling robot 1 determines that a route TR1 linearly proceeding from the departure point PS to the target point PE is the most efficient route with the lowest risk, in consideration of topography and the like.

However, as a result of photographing during traveling after departure, the traveling robot 1 recognizes that there is a muddy area AR2 (area with a poor road surface condition) at a point P1, and determines that it is necessary to correct route setting (that is, it is necessary to search for a new route) since the risk of traveling exceeds a predetermined level at the time of proceeding along the route as originally planned. In this way, the traveling robot 1 travels while photographing, and searches for a route as necessary, such as newly detecting a worker (object OB3) on the way. As a result, the traveling robot 1 searches for a route TR2 that is finally determined to have the lowest risk, and reaches an initial target value PE.

According to the present embodiment, the traveling robot 1 can travel in a better road surface condition without passing through the travel-prohibited zone while avoiding obstacles. This improves safety in traveling. As a result, it is expected that the widespread adoption of the ground-traveling robot in the agricultural field will be promoted.

In general, even in a case where a robot has a function of transmitting a GPS receiving device and determining the current position of the robot, the GPS often does not function sufficiently in agricultural land or the like. In such a case, when the current position of the traveling robot cannot be grasped (that is, the traveling robot loses track of its position), even if the latest and accurate map information is acquired, it is practically impossible to utilize the map information. According to the present embodiment, since the current position of the traveling robot 1 is estimated by comparing the image acquired by the photographing means 104 with the map information 41, an optimal route on which the traveling robot 1 should travel can be determined even in an environment where the GPS cannot be used.

In addition, in general, since agricultural land is large, it may not be realistic to transmit map data and control instructions to a traveling robot using a wireless communication device such as a Wi-Fi router. However, according to the present embodiment, since there is no need to transmit instructions and various types of information to the traveling robot 1 during traveling, the traveling robot 1 can travel safely and reliably regardless of the scale of agricultural land and communication environment.

Furthermore, in a place that is outdoor land such as agricultural land and is highly likely to be exposed to the influence of nature, a change in terrain (erosion of the ground due to rain, fallen trees due to typhoons, branches, plastic greenhouses, and the like flying due to wind, and the like) frequently occurs due to the influence of weather such as heavy rain, and thus, there is a case where the map information provided to the traveling robot 1 does not reflect the current terrain or a position where an obstacle is present. In addition, there is also a case where the situation of an obstacle is greatly changed (such as a case where a person or a work machine moves around in agricultural land). In the present embodiment, even in such cases, the traveling robot 1 can travel by selecting an appropriate route (route without unnecessary detours while ensuring a certain degree of safety).

### <Other Embodiments>

Although the embodiment of the present invention has been described above, other embodiments are conceivable for the present invention. Other embodiments are, for example, as follows.

In the above embodiment, the route control means 107 of the traveling robot 1 determines the necessity of correction of the route, and searches for an alternative route in a case where the correction is necessary. However, the route control means 107 may perform only a determination on the necessity of correction of the route and an external server may search for an alternative route in a case where the correction of the route is necessary. Specifically, there is mounted a wireless communication module for performing wireless communication with an external server in which map information is stored. In response to a request from the traveling robot 1, the external server determines an alternative route using a predetermined algorithm on the basis of position information received from the traveling robot 1 and the map information held by the server, and transmits the determined alternative route to the traveling robot 1.

The map information 41 includes only information on an object whose position and outer shape do not change over time, such as a stationary obstacle. Meanwhile, information on an object whose position and outer shape change over time, such as a dynamic obstacle and a road surface condition, may be included in information different from the map information 41. In this case, the information on the time-varying object may be stored in a RAM to which high speed access is possible or the like.

The setting means 108 may set the route further on the basis of information indicating the traveling performance (ground clearance, approach angle, departure angle, traction, suspension performance, drive system, tire performance, and the like) of the traveling robot 1. For example, it is assumed that there is a limit value in the gradient of a road surface on which the traveling robot 1 can travel. In this case, the setting means 108 determines, as the travel route of the traveling robot 1, a route passing through only an area where the gradient of the road surface is smaller than the limit value.

In short, it is sufficient if the traveling robot according to the present invention includes: a traveling means that travels to a destination location according to a set route; a photographing means; a determination means that determines the presence or absence of an obstacle on the route, a road surface condition of the route, and the presence or absence of a preset travel-prohibited zone on the route on the basis of an image acquired by the photographing means during traveling on the route; and a route control means that determines the necessity of correction of the route on the basis of a result of the determination by the determination means.

### Reference Signs List

- 1: Traveling robot
- 10: Processor
- 21: Input unit
- 22: Display unit
- 23: Drive unit
- 30: Camera
- 40: Storage unit
- 41: Map information
- 42: Route information
- 48: Program
- 101: Acquisition means
- 102: Reception means
- 103: Traveling means
- 104: Photographing means
- 105: Update means
- 106: Determination means
- 107: Route control means
- 108: Setting means

## Claims

1. A traveling robot comprising:
a traveling means that travels to a destination location according to a set route;
a photographing means;
a determination means that determines the presence or absence of an obstacle on the route, a road surface condition of the route, and the presence or absence of a preset travel-prohibited zone on the route on the basis of an image acquired by the photographing means during traveling on the route; and
a route control means that determines the necessity of correction of the route on the basis of a result of the determination by the determination means.

2. The traveling robot according to claim 1, further comprising:
an update means that updates map information used when the route is determined on the basis of the image acquired by the photographing means.

3. The traveling robot according to claim 2, wherein
the map information includes at least information indicating the presence or absence of an obstacle and a road surface condition for each divided area, and
in a case where the determination means determines that the correction of the route is necessary, the route control means determines an alternative route on the basis of the map information.

4. The traveling robot according to claim 3, further comprising:
a reception means that receives the input of a departure point and a destination point;
a means that acquires the map information; and
a setting means that sets a route from the departure point to the destination point on the basis of the road surface condition.

5. The traveling robot according to claim 4, wherein
the setting means sets the route further on the basis of information indicating traveling performance of the traveling robot.

6. A program for causing a computer for controlling a robot including a photographing means to execute:
a step of determining, on the basis of an image acquired by the photographing means during traveling on a set route, the presence or absence of an obstacle on the route, a road surface condition of the route, and the presence or absence of a preset travel-prohibited zone on the route; and
a step of determining the necessity of correction of the route on the basis of a result of the determination.
